# EUROPÄISCHE PATENTSCHRIFT

(11) **EP 1 121 269 B1**
(45) Veröffentlichungstag und Bekanntmachung des Hinweises auf die Patenterteilung: **10.04.2002**
(21) Anmeldenummer: 99957924.6
(22) Anmeldetag: 09.10.1999
(51) Int. Cl.: B60N 2/64

(54) **SITZ**
SEAT
SIEGE

(30) Priorität: 14.10.1998 DE 19847307
(43) Veröffentlichungstag der Anmeldung: 08.08.2001
(73) Patentinhaber: GRAMMER AG, 92224 Amberg (DE)
(72) Erfinder: WILKE, Hans-Joachim, D-89160 Dornstadt-Bollingen (DE); MEILLER, Hermann, D-92533 Wernberg-Köblitz (DE)
(74) Vertreter: LOUIS, PÖHLAU, LOHRENTZ & SEGETH
(86) Internationale Anmeldenummer: DE9903361
(87) Internationale Veröffentlichungsnummer: WO0021787

(56) Entgegenhaltungen:
- EP-A- 0 270 699
- DE-A- 4 116 836
- DE-C- 19 534 660
- FR-A- 2 692 209
- US-A- 3 712 666
- US-A- 4 560 199

## Beschreibung

Die Erfindung betrifft einen Sitz mit einer Sitzplatte und mit einer in ihrer Neigung verstellbaren Rückenlehne.

Bei einem solchen Sitz handelt es sich bspw. um einen Fahrzeugsitz für ein Land-, Luft- oder Wasserfahrzeug oder um einen Stuhl, wie einen Bürostuhl o.dgl.

Bislang wurde davon ausgegangen, daß beim Sitzen eine aufrechte Position mit einem Hohlkreuz (Lordose) eingenommen werden soll. Diesbezüglich wurden eine Vielzahl Vorschläge gemacht. Beispielsweise beschreibt die WO 95/22 307 einen Sitz mit einer Rückenlehne, wobei die Lordose wunschgemäß ein- bzw. verstellbar ist.

Ein in der Lordose verstellbarer Sitz, insbesondere Fahrzeugsitz, ist bspw. auch aus der DE 195 34 660 C1 bekannt. Dieser bekannte Sitz weist eine Rückenlehne mit einer Anzahl druckbeaufschlagbarer Luftkammern auf, die mit einer Steuereinheit zur Steuerung des Druckes in den Luftkammern verbunden sind. Die Steuereinheit ist mit einer Bedieneinheit verbunden, die von einem Sitzbenutzer betätigbar ist, um die Kontur bzw. die Lordose der Rückenlehne des Sitzes wunschgemäß einzustellen. Mit diesem bekannten Sitz kann die Sitzkontur jeweils über die Ausdehnung einer entsprechenden Luftkammer wahlweise im oberen, im mittleren oder im unteren Abschnitt des Lordosebereichs vorgewölbt werden, wie in Spalte 4, Zeilen 31 bis 34 beschrieben ist.

Die DE 41 16 836 A1 beschreibt einen Fahrzeugsitz mit einer mechanischen Massagevorrichtung und die EP 0 270 699 B1 offenbart einen Fahrzeugsitz mit Luftkammern zur dynamischen Massage der Wirbelsäule eines Sitzbenutzers, wobei die Rückenlehne an die S-förmige Krümmung der Wirbelsäule eines Sitzbenutzers angepaßt ist. Auch dieser zuletzt genannte Sitz berücksichtigt also nur die Lordose.

Neue Untersuchungen zeigen jedoch anhand von direkten in vivo Bandscheiben-Druckmessungen, daß die bislang geltenden Erkenntnisse des aufrechten Sitzens mit Hohlkreuz nicht länger aufrechterhaltbar sind. Sitzen ist nach diesen neuesten Erkenntnissen nicht belastender als Stehen, wobei im Sitzen der Druck in den Bandscheiben in der bislang verpönten lässigen Sitzhaltung mit Rundrücken (=Kyphose) sogar auf die Hälfte reduziert wird. Die bequeme Sitzhaltung mit leichtem Rundrücken erzeugt eine deutlich geringere Druckbelastung als die von der Rückenschule bislang empfohlene aufrechte Haltung mit Hohlkreuz (=Lordose).

Ein Sitz gemäß dem Oberbegriff des Anspruchs 1 ist z.B. aus US-A-4 560 199 bekannt.

In Kenntnis dieser Gegebenheiten liegt der Erfindung die Aufgabe zugrunde, einen Sitz der eingangs genannten Art zu schaffen, mit welchem es nicht nur möglich ist, eine Hohlkreuz-Position einzunehmen, sondern auch eine Rundrückenposition, um die Bandscheiben des Sitzbenutzers entsprechend zu entlasten.

Diese Aufgabe wird erfindungsgemäß durch die Merkmale des Anspruchs 1 gelöst.

Durch die erfindungsgemäße Ausbildung des Sitzes mit einer Rückenlehne, die in Abhängigkeit von ihrer jeweiligen Neigung zwischen konvexen Lordosenstellungen und konkaven Kyphosenstellungen verstellbar ist, ergibt sich der Vorteil, daß die Wirbelsäule des jeweiligen Sitzbenutzers aktiv an Hohlkreuz- und Rundrücken-Stellungen angepaßt werden kann. Auf diese Weise wird eine wechselnde Druckbelastung der Bandscheiben erreicht.Infolge dieser wechselnden Druckbelastung ergibt sich der Vorteil, daß die Bandscheibe infolge ihres "Schwammprinzips" ernährt wird.

Bei dem erfindungsgemäßen Sitz wird die Rückenlehne in einer steilen Neigungseinstellung konvex nach vorne gekrümmt in eine zugehörige Lordosenstellung und in einer flachen Neigungseinstellung konkav nach hinten gekrümmt in eine zugehörige Kyphosenstellung eingestellt. Damit wird erreicht, daß der jeweilige Sitzbenutzer in der entsprechenden aufrechten Sitzposition ein Hohlkreuz und in einer flacheren Position einen Rundrücken einnimmt.

Bei dem erfindungsgemäßen Sitz ist die Sitzplatte in Sitzlängsrichtung verstellbar und die Rückenlehne in Abhängigkeit von der Sitzplatten-Längseinstellung in ihrer Neigung und damit zwischen Lordosen- und Kyphosen-Einstellungen verstellbar. Damit wird im Vergleich zu einem Sitz mit nicht verstellbarer Sitzplatte ein erhöhter Sitzkomfort erreicht. Bei dem erfindungsgemäßen Sitz ist die Rückenlehne in einer zurückgestellten Position der Sitzplatte steil geneigt in eine entsprechende Lordosenstellung und in einer vorverstellten Position der Sitzplatte flach geneigt in eine Kyphosenstellung eingestellt. Damit kann den anatomischen Gegebenheiten verschieden großer Sitzbenutzer verbessert Rechnung getragen werden.

Der erhöhte Sitzkomfort ergibt sich dadurch, daß die Sitzplatte in ihrer Sitzlängsrichtung und simultan in ihrer Neigung und damit die Rückenlehne zwischen entsprechenden Lordose- und Kyphosestellungen verstellbar ist.

Bei dem erfindungsgemäßen Sitz kann die Rückenlehne statisch zwischen Lordosen- und Kyphosenstellungen verstellbar sein. Damit wird - wie bereits ausgeführt worden ist - nicht nur eine wechselnde Druckbelastung in der Bandscheibe erreicht, sondern es wird außerdem eine Ernährung der Bandscheibe infolge ihres "Schwammprinzips" erzielt. Zweckmäßig kann es sein, wenn bei dem erfindungsgemäßen Sitz die Rückenlehne dynamisch zwischen Lordosen- und Kyphosenstellungen verstellbar ist, um nicht nur eine gewünschte Druckentlastung der Bandscheibe sowie eine Ernährung derselben zu erreichen, sondern außerdem auch einen Massageeffekt. Das alles wirkt sich auf den Sitzkomfort entsprechend positiv aus.

Weitere Einzelheiten, Merkmale und Vorteile ergeben sich aus der nachfolgenden Beschreibung von in der Zeichnung schematisch dargestellten Ausbildungen des erfindungsgemäßen Sitzes. Dabei zeigen die Figuren 1 und 5 bis 9 Sitze, die nicht zur Erfindung gehören.
- Figur 1: einen Sitz mit einer nicht verstellbaren Sitzplatte und einer in ihrer Neigung verstellbaren Rückenlehne,
- Figur 2: in einer der Figur 1 ähnlichen schematischen Seitenansicht einen erfindungsgemäßen Sitz mit einer verstellbaren Sitzplatte und einer von der Verstellung der Sitzplatte abhängig verstellbaren Rückenlehne,
- Figur 3: eine schematische Seitenansicht eines erfindungsgemäßen Sitzes mit einem starren Grundgestell und einer in bezug hierzu verstellbaren Sitzplatte und Rückenlehne in einer Lordosenstellung,
- Figur 4: den Sitz gemäß Figur 3 in einer Kyphösenstellung,
- Figur 5: schematisch eine Ausbildung des Sitzes gemäß Figur 1 mit ortsfester Sitzplatte, wobei die Rückenlehne eine Lordosenstellung einnimmt,
- Figur 6: den Sitz gemäß Figur 5, wobei die Rückenlehne eine Kyphosenstellung einnimmt,
- Figur 7: schematisch eine weitere Ausbildung des Sitzes entsprechend dem Sitz gemäß Figur 1 mit ortsfester Sitzplatte, wobei die Rückenlehne eine Lordosenstellung einnimmt,
- Figur 8: den Sitz gemäß Figur 7, wobei die Rückenlehne eine Zwischenstellung zwischen der Lordosenstellung gemäß Figur 7 und einer Kyphosenstellung gemäß Figur 9 einnimmt,
- Figur 9: den Sitz gemäß den Figuren 7 und 8, wobei die Rückenlehne eine Kyphosenstellung einnimmt,
- Figur 10: eine der Figur 5 ähnliche Darstellung eines erfindungsgemäßen Sitzes, wobei die Sitzplatte in Sitzlängsrichtung und in ihrer Neigung einstellbar ist, und
- Figur 11: den Sitz gemäß Figur 10, wobei die Rückenlehne eine Kyphosenstellung einnimmt.

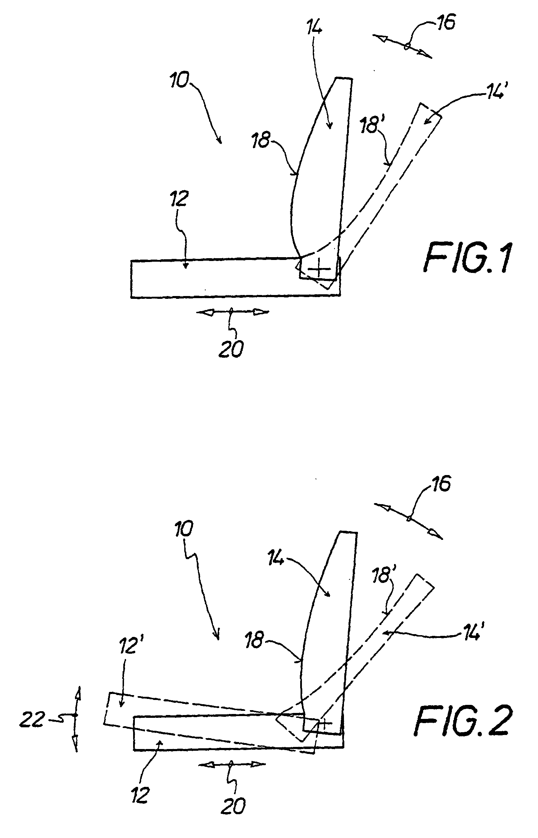

Figur 1 zeigt schematisch in einer Seitenansicht einen Sitz 10 mit einer Sitzplatte 12 und einer Rückenlehne 14. Die Rückenlehne 14 ist in bezug auf die Sitzplatte 12 in ihrer Neigung verstellbar. Das ist durch den bogenförmigen Pfeil 16 verdeutlicht. Die Rückenlehne 14 ist mit durchgezogenen Linien in einer steilen Neigungseinstellung und mit dünnen strichlierten Linien in einer flachen Neigungsstellung gezeichnet und mit der Bezugsziffer 14' bezeichnet. In der steilen Neigungsstellung ist die Frontfläche 18 der Rückenlehne 14 konvex nach außen in eine Lordosenstellung eingestellt. In der flachen Neigungsstellung nimmt die Frontfläche 18' der Rückenlehne 14' eine konkav nach hinten gekrümmte Kyphosenstellung ein.

Die Sitzplatte 12 des Sitzes 10 gemäß Figur 1 kann ortsfest, d.h. unverstellbar, vorgesehen sein. Die Sitzplatte 12 kann bei einer anderen Ausbildung des Sitzes 10 jedoch auch in Sitzlängsrichtung hin- und herverstellbar sein. Das ist in Figur 1 durch den Doppelpfeil 20 angedeutet. Die Rückenlehne 14 kann hierbei in Abhängigkeit von der linearen Einstellung der Sitzplatte 12 in Sitzlängsrichtung oder von dieser Längseinstellung unabhängig verstellbar sein.

Figur 2 zeigt eine Ausbildung des Sitzes 10, bei welchem die Sitzplatte 12 in Sitzlängsrichtung und gleichzeitig in ihrer Neigung einstellbar ist. Die Verstellung der Sitzplatte 12 in Sitzlängsrichtung ist wiederum durch den Doppelpfeil 20 angedeutet. Die Neigungseinstellung der Sitzplatte 12 ist durch den bogenförmigen Doppelpfeil 22 verdeutlicht. Bei dem Sitz 10 gemäß Figur 2 kann die Sitzplatte 12 in der Sitzlängsrichtung und in der Neigung voneinander unabhängig oder voneinander abhängig verstellbar sein.

In der in Figur 2 mit durchgezogenen Linien gezeichneten Stellung der Sitzplatte 12 nimmt die Rückenlehne 14 eine steile Neigungseinstellung ein. In der in Sitzlängsrichtung nach vorne und in der Neigung vorne hochgestellten Stellung der Sitzplatte, die mit der Bezugsziffer 12' bezeichnet und mit dünnen strichlierten Linien angedeutet ist, nimmt die mit dünnen strichlierten Linien gezeichnete und mit der Bezugsziffer 14' bezeichnete Rückenlehne eine flache Neigungsstellung ein. In der steilen Neigungsstellung der Rückenlehne 14 ist ihre Frontfläche 18 konvex nach vorne gekrümmt, um eine Lordosenstellung einzunehmen. In der flachen Neigungsstellung ist die Frontfläche 18' der Rückenlehne 14' konkav nach hinten gekrümmt und nimmt eine Rundrücken- d.h. Kyphosenstellung ein.

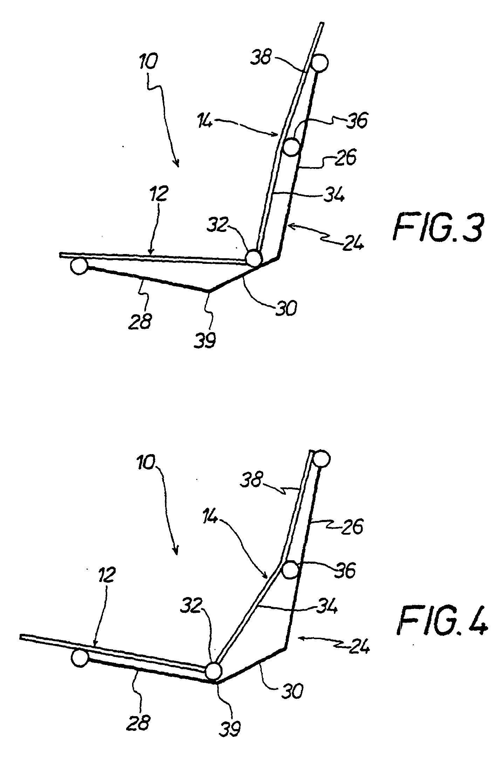

Die Figuren 3 und 4 zeigen schematisch eine Ausbildung des Sitzes 10 - ähnlich dem in Figur 2 angedeuteten Sitz 10 -, wobei ein starres Grundgestell 24 des Sitzes 10 mit einer Sitzplatte 12 und einer Rückenlehne 14 derartig kombiniert ist, daß in der nach rückwärts verstellten und wenig geneigten Einstellung der Sitzplatte 12 die Rückenlehne steil geneigt ist und eine nach vorne konvex gekrümmte Lordosenstellung (sh. Figur 3) einnimmt. Bei nach vorne und nach vorne oben verstellter Sitzplatte 12 nimmt die Rückenlehne 14 eine flache Neigungsstellung ein und ist in eine nach hinten gekrümmte Kyphosenstellung eingestellt (sh. Figur 4). Zu diesem Zwecke weist das starre Grundgestell 24 bspw. einen Rückenlehnenabschnitt 26, einen Sitzplatten-Abschnitt 28 und einen den Rückenlehnenabschnitt 26 mit dem Sitzplatten-Abschnitt 28 verbindenden Verbindungsabschnitt 30 auf. Die Rückenlehne 14 weist einen zur Sitzplatte 12 benachbarten und mit dieser mittels eines Gelenkes 32 gelenkig verbundenen Gesäßabschnitt 34 und einen mit dem Gesäßabschnitt 34 mittels eines Gelenkes 36 gelenkig verbundenen Schulterabschnitt 38 auf.

In der in Figur 3 schematisch verdeutlichten Lordosenstellung befindet sich das Gelenk 32 zwischen der Sitzplatte 12 und der Rückenlehne 14 im Bereich des Verbindungsabschnittes 30 des starren Grundgestelles 24 des Sitzes 10. In der in Figur 4 schematisch verdeutlichten Kyphosenstellung der Rückenlehne 14 befindet sich das Gelenk 32 im Übergangsbereich 39 zwischen dem Sitzplattenabschnitt 28 und dem Verbindungsabschnitt 30 des starren Grundgestelles 24 des Sitzes 10. Durch Verstellen der Sitzplatte 12 in Sitzlängsrichtung wird automatisch die Neigung der Sitzplatte 12 und die Rückenlehne 14 zwischen der Lordosenstellung (sh. Figur 3) und der Kyphosenstellung (sh. Figur 4) hin- und herverstellt. Das kann statisch, d.h. durch wunschgemäß gleichsam einmalige Verstellung oder dynamisch, d.h. hin- und hergehend geschehen.

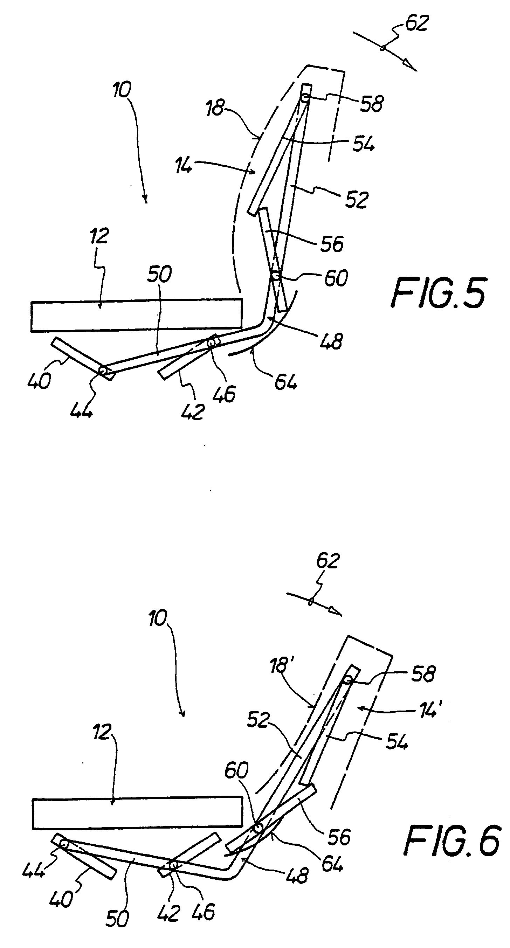

Die Figuren 5 und 6 zeigen eine weitere Ausbildung des Sitzes 10 in einer Lordosenstellung (sh. Figur 5) der Rückenlehne 14 und in einer Kyphosenstellung (sh. Figur 6) der Rückenlehne 14. Hierbei kann die Sitzplatte 12 bspw. ortsfest, d.h. unbeweglich vorgesehen - ähnlich wie die Ausbildung in Figur 1 - sein. Mit der Sitzplatte 12 sind Linearführungen 40 und 42 kombiniert. Entlang der Linearführung 40 ist ein Führungsorgan 44 und entlang der Linearführung 42 ist ein Führungsorgan 46 linear beweglich geführt. Die Führungsorgane 44 und 46 sind an einem Gestellteil 48 vorgesehen, das mit einem Sitzabschnitt 50 sich unter die Sitzplatte 12 hineinerstreckt, und das einen Rückenlehnenabschnitt 52 aufweist. Am Rückenlehnenabschnitt 52 sind zwei Rückenlehnenteile 54 und 56 um zugehörige Schwenkachsen 58 und 60 verschwenkbar angebracht. In der in Figur 5 schematisch gezeichneten Stellung des Gestellteiles 48 nehmen die Rückenlehnenteile 54 und 56 eine derartige Stellung ein, daß die strichliert angedeutete Rückenlehne 14 mit ihrer Frontfläche 18 eine Lordosenstellung einnimmt. Demgegenüber nehmen die Rückenlehnenteile 54 und 56 in der in Figur 6 verdeutlichten Stellung eine nach rückwärts abgewinkelte Position ein, so daß die mit strichlierten Linien angedeutete Rückenlehne 14' mit ihrer Frontfläche 18' eine nach rückwärts konkav gekrümmte Kyphosenstellung einnimmt.

Um das Rückenlehnenteil 56 beim Nachrückwärtsschwenken der Rückenlehne 14, das durch den bogenförmigen Pfeil 62 angedeutet ist, von der in Figur 5 angedeuteten Position um die Schwenkachse 60 in die nach rückwärts geschwenkte Position zu schwenken, ist das Rückenlehnenteil 56 mit einem Kulissenelement 64 formschlüssig verbunden. Das Kulissenelement 64 ist sitzfest vorgesehen.

Der Sitz 10 gemäß den Figuren 5 und 6 weist also die Funktion des in Figur 1 angedeuteten Sitzes 10 mit nicht beweglicher Sitzplatte 12 auf. Selbstverständlich ist es auch möglich, den Sitz 10 gemäß den Figuren 5 und 6 mit eineer beweglichen Sitzplatte 12 entsprechend dem Funktionsprinzip gemäß Fig. 2 auszubilden.

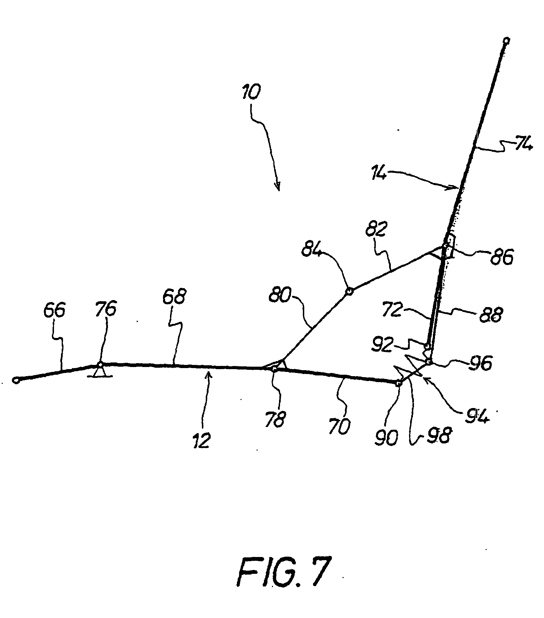

Die Figuren 7, 8 und 9 zeigen schematisch noch eine andere Ausbildung des Sitzes 10 mit einer Sitzplatte 12 und einer Rückenlehne 14. Die Sitzplatte 12 weist Abschnitte 66, 68 und 70 auf. Die Rückenlehne 14 weist Abschnitte 72 und 74 auf. Die Abschnitte 66 und 68 sind mittels eines Verbindungselementes 76 miteinander starr verbunden. Das Verbindungselement 76 ist ortsfest vorgesehen.

Die Abschnitte 68 und 70 der Sitzplatte 12 sind miteinander mittels eines Verbindungselementes 78 starr verbunden. Vom Verbindungselement 78 steht außerdem starr ein Schenkelelement 80 weg, das mit einem zweiten Schenkelelement 82 mittels einer Gelenkachse 84 gelenkig verbunden ist. Die Abschnitte 72 und 74 der Rückenlehne 14 sind mittels eines Verbindungselementes 86 gelenkig verbunden. Das zweite Schenkelelement 82 steht vom Verbindungselement 86 gelenkig weg. Vom Verbindungselement 86 steht außerdem ein drittes Schenkelelement 88 weg. Das zweite Schenkelelement 82 und das dritte Schenkelelement 88 sind am Verbindungselement 86 miteinander starr verbunden und um das Verbindungselement 86 herum verschwenkar.

Zwischen dem vom Verbindungselement 78 entfernten Ende 90 des Abschnittes 70 der Sitzplatte 12 und dem vom Verbindungselement 86 entfernten Ende 92 des Rückenlehnen-Abschnittes 72 ist ein Federelement 94 eingespannt.

Das dritte Schenkelelement 28 ist mittels einer Gelenkachse 96 mit einem Gelenkelement 98 gelenkig verbunden, das mit dem Ende 90 des Abschnittes 70 der Sitzplatte 12 gelenkig verbunden ist.

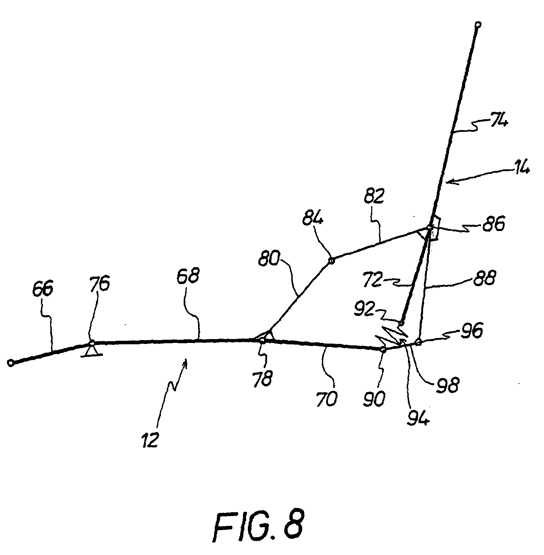

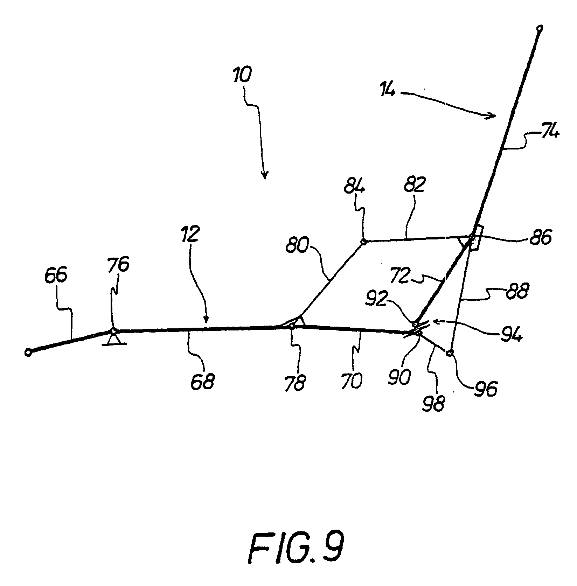

In Figur 7 nimmt die Rückenlehne 14 eine steile Neigungsstellung ein, wobei ihre Abschnitte 72 und 74 eine nach vorne gerichtete Lordosenstellung einnehmen. Demgegenüber zeigt die Figur 9 eine flach nach hinten geneigte Stellung der Rückenlehne 14, in welcher ihre Abschnitte 72 und 74 nach rückwärts abgewinkelt eine Kyphosenstellung einnehmen. Die Figur 8 zeigt eine Zwischenstellung der Rückenlehne 14 zwischen der in Figur 7 angedeuteten Lordosenstellung und der in Figur 9 verdeutlichten Kyphosenstellung.

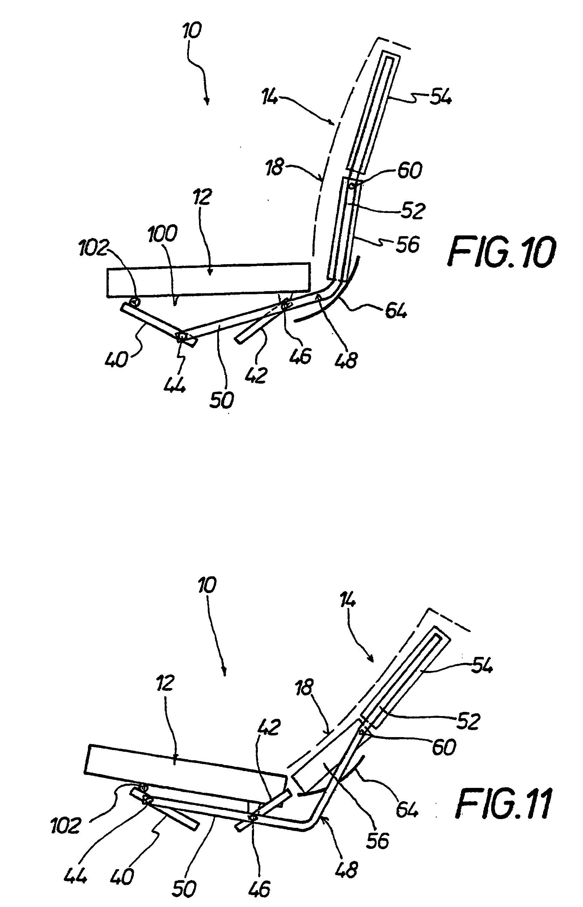

Die Figuren 10 und 11 zeigen eine andere Ausbildung des Sitzes 10, bei welchem die Sitzplatte 12 in Sitzlängsrichtung und gleichzeitig in ihrer Neigung verstellbar ist. In Figur 10 nimmt die Rückenlehne 14 eine Lordosenstellung und in Figur 11 nimmt die Rückenlehne 14 eine Kyphosenstellung ein. Das ist durch die strichliert gezeichnete Frontfläche 18 der Rückenlehne 14 verdeutlicht.

Die Sitzplatte 12 des Sitzes 10 liegt mit ihrer Unterseite 100 an Rollen 102 an, die von der Linearführung 40 nach oben stehen. Von der Unterseite 100 der Sitzplatte 12 stehen Führungsorgane 46 nach unten, die entlang der Linearführung 42 beweglich sind. Die Linearführungen 40 und 42 sind einander zugewandt vorgesehen.

Entlang der Linearführung 40 ist ein Führungsorgan 44 beweglich geführt, das am Sitzabschnitt 50 des Gestellteiles 48 vorgesehen ist. Das Gestellteil 48 weist ausserdem einen Rückenlehnenabschnitt 52 auf. Der Rückenlehnenabschnitt 52 ist mit einem Rückenlehnenteil 54 der Rückenlehne 14 fest verbunden. Die Rückenlehne 14 weist ein zweites Rückenlehnenteil 56 auf, das mit dem Rückenlehnenabschnitt 52 mittels einer Schwenkachse 60 schwenkbeweglich verbunden ist. Das Rückenlehnenteil 56 ist mit seinem von der Schwenkachse 60 entfernten Unterrand an einem Kulissenelement 64 gelagert.

In Figur 10 befindet sich die Sitzplatte 12 in einer in Sitzlängsrichtung rückgestellten und in ihrer Neigung flachen Position. In dieser Position der Sitzplatte 12 nimmt die Rückenlehne 14 bzw. deren Frontfläche 18 eine Lordosenstellung ein. Im Vergleich hierzu zeigt die Figur 11 eine Einstellung des Sitzes 10, bei welcher die Sitzplatte 12 in Sitzlängsrichtung nach vorne verstellt ist, wobei die Sitzplatte 12 gleichzeitig eine vorne nach oben geneigte Position einnimmt. In dieser Position der Sitzplatte 12 nimmt die Rückenlehne 14 bzw. deren Frontfläche 18 eine Kyphosenstellung ein.

Die Erfindung ist selbstverständlich nicht auf die in den Zeichnungsfiguren dargestellten bzw. schematisch angedeuteten Ausbildungen beschränkt, sondern es sind im Rahmen der Ansprüche beliebige andere Ausführungen realisierbar.

## Patentansprüche

1. Sitz mit einer verstellbaren Sitzplatte (12) und mit einer in Abhängigkeit von der Sitzplatteneinstellung in ihrer Neigung zwischen einer konvexen Lordosenstellung und einer konkaven Kyphosenstellung verstellbaren Rückenlehne, die in einer steilen Neigungsstellung konvex nach vorne gekrümmt in eine zugehörige Lordosenstellung und in einer flachen Neigungseinstellung konkav nach hinten gekrümmt in eine Kyphosenstellung eingestellt ist,
**dadurch gekennzeichnet,**
**daß** die Sitzplatte (12) in Sitzlängsrichtung und daß die Rückenlehne (14) in Abhängigkeit von der Sitzplatten-Längseinstellung in ihrer Neigung verstellbar ist, wobei die Rückenlehne (14) in einer zurückgesteliten Position der Sitzplatte (12) steil geneigt in eine zugehörige Lordosenstellung und in einer vorverstellten Position der Sitzplatte (12) flach geneigt in eine entsprechende Kyphosenstellung eingestellt ist.

2. Sitz nach Anspruch 1,
**dadurch gekennzeichnet,**
**daß** die Rückenlehne (14) statisch zwischen Lordosen- und Kyphosenstellungen verstellbar ist.

3. Sitz nach Anspruch 1
**dadurch gekennzeichnet,**
**daß** die Rückenlehne (14) dynamisch zwischen Lordosen- und Kyphosenstellungen verstellbar ist.

## Claims

1. Seat with an adjustable seat panel (12) and with a backrest which, in dependence on the seat-panel adjustment, can be adjusted in inclination between a convex lordosis position and a concave kyphosis position and, curved convexly in the forward direction in a steep-inclination position, has been adjusted into an associated lordosis position and, curved concavely in the rearward direction in the shallow-inclination position, has been adjusted into a kyphosis position, **characterized in that** the seat panel (12) can be adjusted in the longitudinal direction of the seat and the backrest (14) can be adjusted in inclination in dependence on the longitudinal adjustment of the seat panel, the backrest (14), inclined steeply in a set-back position of the seat panel (12), having been adjusted into an associated lordosis position and, inclined to a shallow extent in a forward position of the seat panel (12), having been adjusted into a corresponding kyphosis position.

2. Seat according to Claim 1, **characterized in that** the backrest (14) can be adjusted statically between the lordosis and kyphosis positions.

3. Seat according to Claim 1, **characterized in that** the backrest (14) can be adjusted dynamically between the lordosis and kyphosis positions.

## Revendications

1. Siège du type comportant une plaque d'assise réglable (12) et un dossier d'appui dont l'inclinaison par rapport à la position de la plaque d'assise est réglable entre un état de lordose convexe et un état de cyphose concave, et qui est positionné à l'état replié vers l'avant avec un degré d'inclinaison convexe relevée dans un état de lordose correspondant et vers l'arrière avec un degré d'inclinaison concave plat dans un état de cyphose correspondant, **caractérisé en ce que** la plaque d'assise (12) est réglable dans la direction longitudinale du siège et **en ce que** le dossier d'appui (14) est réglable en inclinaison en fonction de la position longitudinale de la plaque d'assise, le dossier d'appui étant positionné dans une position ramenée vers l'arrière de la plaque d'assise (12) inclinée relevée dans un état de lordose correspondant et dans une position ramenée vers l'avant de la plaque d'assise (12) inclinée à plat dans un état de cyphose correspondant.

2. Siège selon la revendication 1, **caractérisé en ce que** le dossier d'appui (14) est réglable de manière statique entre les états de lordose et de cyphose.

3. Siège selon la revendication 1, **caractérisé en ce que** le dossier d'appui (14) est réglable de manière dynamique entre les états de lordose et de cyphose.
